(19) Europäisches Patentamt
European Patent Office
Office européen des brevets

(11) EP 0 507 094 B1

(12) EUROPEAN PATENT SPECIFICATION

(45) Date of publication and mention of the grant of the patent:
**11.06.1997 Bulletin 1997/24**

(51) Int Cl.[6]: **C09K 19/30**

(21) Application number: **92103677.8**

(22) Date of filing: **04.03.1992**

# (54) Nematic liquid-crystal composition

Nematische Flüssigkristallzusammensetzung

Composition liquide cristalline nématique

(84) Designated Contracting States:
**DE GB**

(30) Priority: **05.03.1991 EP 91103379**

(43) Date of publication of application:
**07.10.1992 Bulletin 1992/41**

(73) Proprietor: **MERCK PATENT GmbH**
**D-64271 Darmstadt (DE)**

(72) Inventors:
- **Plach, Herbert, Dr.**
  **W-6100 Darmstadt (DE)**
- **Finkenzeller, Ulrich, Dr.**
  **W-6831-Plankstadt (DE)**
- **Hittich, Reinhard, Dr.**
  **W-6101 Modautal 1 (DE)**
- **Bartmann, Ekkehard, Dr.**
  **W-6106 Erzhausen (DE)**
- **Poetsch, Eike Dr.**
  **W-6109 Mühltal (DE)**

(56) References cited:
**WO-A-91/16397** **WO-A-91/16398**
**WO-A-91/16399** **WO-A-91/16400**
**WO-A-91/16401** **WO-A-92/02597**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 507 094 B1

## Description

The invention relates to a nematic liquid-crystal composition based on terminally and laterally fluorinated compounds. This composition is especially useful for active matrix application.

Active matrix displays (AMD) are highly favored for commercially interesting displays with a high information content. Such AMDs are used for TV application and also for displays with high information content for computer terminals, automobiles and aeroplanes.

AMDs have non-linear electrical switching elements which are integrated at each picture element. As non-linear driving elements thin film transistors (TFT) [Okubo, U., et al., 1982, SID 82 Digest, pp. 40-41] or diodes (e.g.: metal insulator metal: MIM) [Niwa, K., et al., 1984, SID 84, Digest, pp. 304-307] can be applied. These non-linear driving elements allow to use an electro-optical effect with a rather flat electro-optical characteristic if a good viewing angle characteristic can be obtained. So a TN-type LC cell [Schadt, M. and Helfrich, W., 1971, Appl. Phys. Lett., 18, 127] with a twist angle of 90° can be used. To provide the good contrast over a wide viewing angle, operation in the first minimum of transmission [Pohl, L., Eidenschink, R., Pino, F. del., and Weber, G., 1980, German Pat., DBP 30 22 818, and 1981, US Pat. 4 398 803; Pohl, L., Weber, G., Eidenschink, R., Baur, G., and Fehrenbach, W., 1981, Appl. Phys. Lett., 38, 497; Weber, G., Finkenzeller, U., Geelhaar, T., Plach, H.J., Rieger, B., and Pohl, L., 1988, Int. Symp. on Liq. Cryst., Freiburg, to be published in Liq. Crys.] is required. These AMDs are very well suited for TV applications and consequently are of high commercial interest. For these applications some physical properties of the liquid crystals become more important than for passive TN displays. Some of the decisive properties for the performance of an AMD are resistivity and stability of the liquid crystal [Togashi, S., Sekiguchi, K., Tanabe, H., Yamamoto, E., Sorimachi, K., Kajima, E., Watanabe, H., Shimuzu, H., Proc. Eurodisplay 84, Sept. 1984: A 210-288 Matrix LCD Controlled by Double Stage Diode Rings, p. 144 ff, Paris; Stromer, M., Proc. Eurodisplay 84, Sept. 1984: Design of Thin Film Transistors for Matrix Addressing of Television Liquid Crystal Displays, p. 145 ff, Paris].

In an AMD the non-linear switching elements are addressed in a multiplex scheme. So they charge the electrodes of a pixel in the limited time they are active. Then they become inactive until they are addressed again in the next cycle. Consequently the change of the voltage on an activated (charged) pixel is a nondesired but a very decisive feature of such a display. The discharge of a pixel is determined by two factors. They are the capacity of the electrodes of the pixel and resistivity of the dielectric material between the electrodes, namely the liquid crystal. The characteristic time constant of the decay of the voltage at a pixel (RC-time) has to be significantly bigger than the time between two adressing cycles (tadr.). A parameter frequently used to describe the performance of an AMD is the voltage holding ratio HR of a picture element:

$$HR = \frac{V\,(to) + V\,(to + tadr.)}{2\,V\,(to)}$$

As the voltage at a pixel decays exponentially an increase of the holding ratio necessitates liquid crystal materials with exceptionally high resistivities.

There are several points of importance for the resistivity of the liquid crystal inside a display, e.g. orientation layers, curing condition of the orientation material. But by no means less important are the electrical properties of the liquid crystal used. Especially the resistivitiy of the liquid crystal in the display determines the magnitude of the voltage drop at the pixel.

There is thus still a great need for liquid-crystal composition having a high resistivity and other suitable material properties for use in AMDs such as a broad nematic mesophase range with an extremely low transition temperature smectic-nematic and no crystallization at low temperatures.

The invention has for its object to provide a liquid-crystal composition with a very high resistivity which meets also the other demands.

It has now been found that a nematic liquid-crystal composition based on terminally and laterally fluorinated compounds, characterized in that that it comprises about 8 to 80 % by weight of one or more compounds from group 1:

group 1: 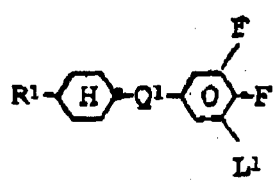

wherein $R^1$ denotes a straight-chain alkyl, alkenyl or oxaalkyl group of 2 to 7 carbon atoms, $Q^1$ is

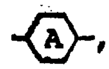

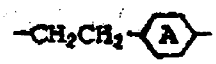

or

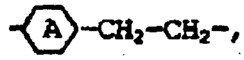

wherein A is trans-1,4-cyclohexylene or 1,4-phenylene which can be substituted by one or two F atoms, and $L^1$ is H or F, and about 8 to 80 % by weight of one or more compounds from group 2:

group 2: 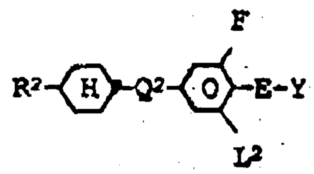

wherein $R^2$, $Q^2$ and $L^2$ have the meaning given above for $R^1$, $Q^1$ and $L^1$ respectively, E is $CF_2$ or $OCF_2$ and Y is H, F or Cl, is highly suited for AMD application. Very high RC time values can be obtained in AMDs. These compositions also show a reduced viscosity, a very low threshold voltage, allow operation in AMDs in the first minimum of transmission and/or do not exhibit crystallization at low temperatures.

The international patent application WO 92/02597, which is prior art pursuant Article 54 (3) EPC discloses similar liquid crystalline compositions comprising compounds of formula,

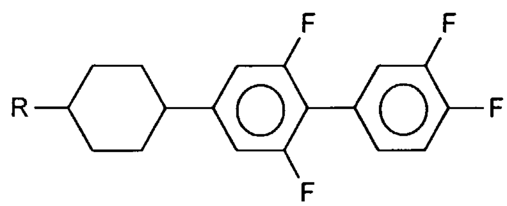

in which R denotes alkyl having up to 7 carbon atoms.

Such compositions are excluded from the claims with the aid of the proviso clause.

Such compositions preferably contain two, three, four or more compounds from group 1. Preferred compositions comprise more than 12 % by weight of one or more compounds from group 1.

Preferably the compositions simultaneously comprise compounds from groups 1 to 2 wherein A is trans-1,4-cyclohxylene and those wherein A is 1,4-phenylene.

The compounds from groups 1 to 2 are known from the European Patent Appln. 0 387 032 and the International Patent Application WO 89/02884 or can be prepared in analogy to known compounds.

Preferred compositions also comprise one or more compounds from group 0 having two rings:

group 0: 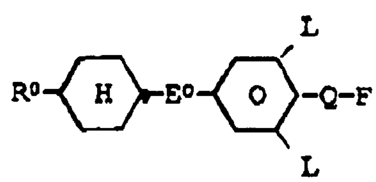

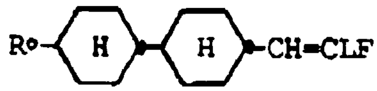

where $R^0$ denotes a straight-chain alkyl group of 2 to 7 carbon atoms, $E^0$ is $-(CH_2)_4-$, $-(CH_2)_2-$, -CO-O- or a single bond an L and Q are as defined in group 2. Preferably $E^0$ is $-(CH_2)_2$ or a single bond, Q is a single bond and one of L is H and the other L is H or F.

The compositions according to this invention preferably comprise 8 to 60 % by weight and especially 8 to 45 % by weight of components from group 1. The preferred weight percent ranges for the other groups (if present) are as follows:
group 0: 5 to 30 %, especially 10 to 25 %
group 2: 6 to 60 %, especially 8 to 45 %

Preferred compositions also comprise one or more compounds from sub-group 1a/2a:

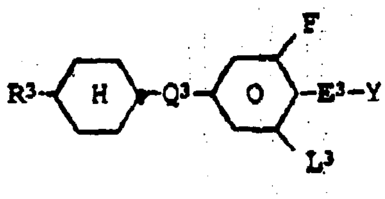

wherein $R^3$ and $L^3$ have the meaning given above for $R^1$ and $L^1$, $Q^3$ is

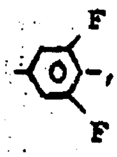

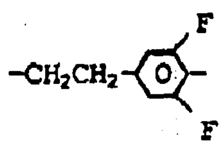

or

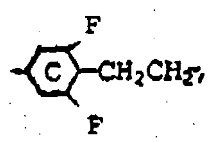

Y is F or Cl and $E^3$ is $CF_2$, $OCF_2$ or a single bond. These materials are known from WO 91/08184, WO 91/03450 or can be prepared in analogy to known compounds. Compositions comprising such components (preferably about 15 to 40 % by weight, especially about 20 to 30 % by weight) exhibit particularly low threshold voltages.

Preferably the components from groups 1, 2 and 3 from the basis of the claimed compositions and constitute at least 60 % (preferably at least 75 %) by weigh of the compositions. It is, however, also possible to use besides components from groups 0 to 3 also other LC components in smaller percentages for fine-tuning the claimed compositions.

The preparation of the compositions according to the invention is effected in the conventional manner. In general, the desired amount of the components which is used in the smaller amount is dissolved in the componentns which constitutes the main constituent, preferably at elevated temperature. If this temperature is chosen to be above the clearing point of the main constituent, the completeness of the process of dissolving can be observed particularly easily.

By means of suitable additives the liquid crystal phases according to the invention can be modified in such a way that they can be used in any kind of AMD.

The examples below serve to illustrate the invention without limiting it. In the examples, the melting point and clear point of a liquid crystal substance are given in degrees Celsius. The percentages are by weight.

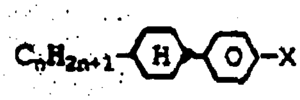
= PCH-nX

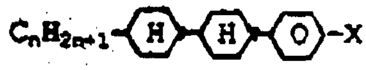
= CCP-nX

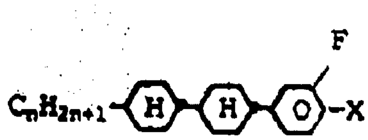
= CCP-nX.F

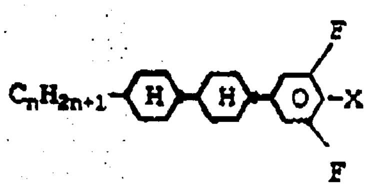
= CCP-nX.F.F

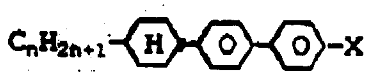
= BCH-nX

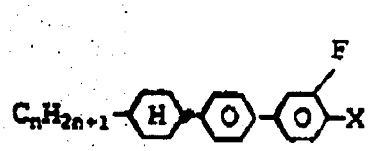
= BCH-nX.F

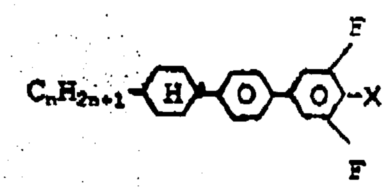
= BCH-nX.F.F

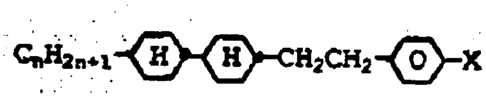
= ECCP-nX

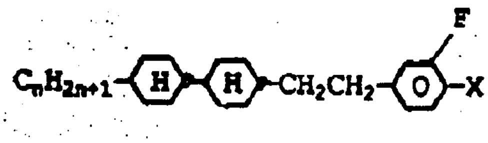

= ECCP-nX.F

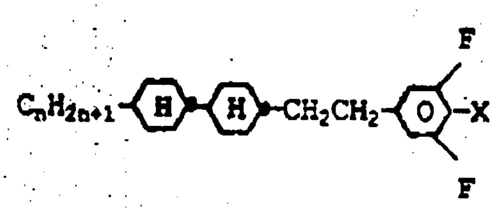

= ECCP-nX.F.F

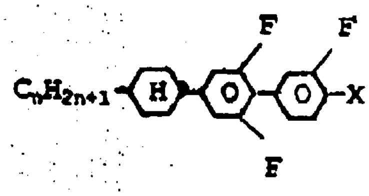

= CUP-nX.F

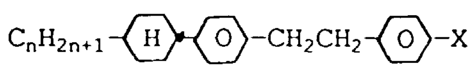

= EBCH-nX

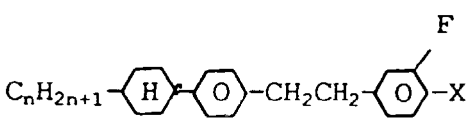

= EBCH-nX.F

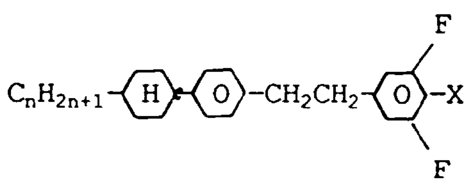

= EBCH-nX.F.F

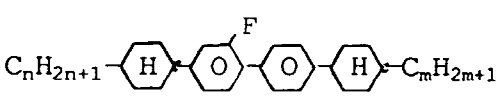

= CBC-nmF

X = $OCF_2$ in the acronym denotes X = $OCHF_2$ in the chemical formula. The compounds as defined by the above acronyms are preferred components of the conpositions, especially those with X = F, $OCF_3$, $OCF_2$ and $CF_3$.

Example 1

| | |
|---|---|
| Clearing point [°C] | +69 |
| Viscosity [$mm^2s^{-1}$] 20 °C | - |
| Δn (589 nm, 20 °C) | +0.0838 |

(continued)

| | |
|---|---|
| $V_{(10,0,20)}$ [V] | 1.35 |
| $V_{(50,0,20)}$ [V] | 1.67 |
| $V_{(90,0,20)}$ [V] | 2.19 |

Composition [%]:

| | |
|---|---|
| PCH-5F | 5.0 % |
| PCH-7F | 6.0 % |
| CCP-20CF3.F | 15.0 % |
| CCP-30CF3.F | 15.0 % |
| CCP-50CF3.F | 15.0 % |
| CUP-30CF3.F | 12.0 % |
| CUP-50CF3.F | 11.0 % |
| CCP-3F.F.F | 12.0 % |
| CCP-5F.F.F | 9.0 % |

Example 2

| | |
|---|---|
| Clearing point [°C] | +81 |
| Viscosity [$mm^2s^{-1}$] 20 °C | - |
| Δn (589 nm, 20 °C) | +0.0882 |
| $V_{(10,0,20)}$ [V] | 1.28 |
| $V_{(50,0,20)}$ [V] | 1.95 |
| $V_{(90,0,20)}$ [V] | 2.54 |

Composition [%]:

| | |
|---|---|
| PCH-5F | 5.0 % |
| PCH-7F | 6.0 % |
| CCP-20CF3 | 10.0 % |
| CCP-30CF3 | 10.0 % |
| CCP-50CF3 | 10.0 % |
| CCP-20CF3.F | 12.0 % |
| CCP-30CF3.F | 12.0 % |
| CCP-50CF3.F | 12.0 % |
| CUP-30CF3.F | 12.0 % |
| CUP-50CF3.F | 11.0 % |

**Claims**

**1.** A nematic liquid-crystal composition based on terminally and laterally fluorinated compounds, characterized in that it comprises about 8 to 80 % by weight of one or more compounds from group 1:

group 1: 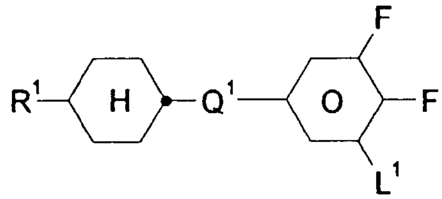

wherein $R^1$ denotes a straight-chain alkyl, alkenyl or oxaalkyl group of 2 to 7 carbon atims, $Q^1$ is

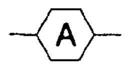,

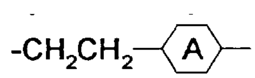

or

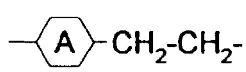,

wherein A is trans-1,4-cyclohexylene or 1,4-phenylene which can be substituted by one or two F atoms, and $L^1$ is H or F, and about 8 to 80 % by weight of one or more compounds from group 2:

group 2: 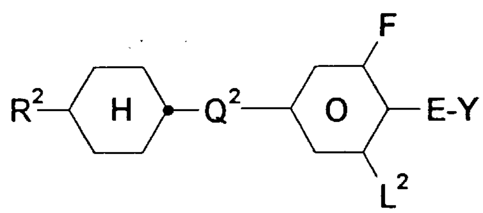

wherein $R^2$, $Q^2$ and $L^2$ have the meaning given above for $R^1$, $Q^1$ and $L^1$ respectively, E is $CF_2$ or $OCF_2$ and Y is H, F or Cl, whereby the composition comprises one or more compounds from group 1 or group 2 wherein A is 1,4-phenylene which is substituted by one or two F atoms, with the proviso that compositions comprising one or more compounds of the formula

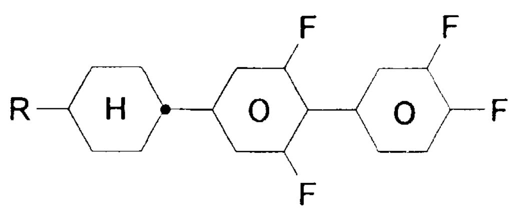

(R = alkyl up to 7 carbon atoms) are excluded.

**2.** A nematic liquid-crystal composition according to Claim 1, characterized in that it comprises two, three or four compounds from group 1.

**3.** A nematic liquid-crystal composition according to Claim 1 or 2, characterized in that it comprises 8 to 60 % by weight of one or more compounds from group 1 and 8 to 60 % by weight of one or more compounds from group 2.

**4.** A nematic liquid-crystal composition according to Claim 3, characterized in that it comprises three or more compounds from each of the groups 1 and 2.

## Patentansprüche

**1.** Nematische Flüssigkristallzusammensetzungen auf der Basis von end- und seitenfluorierten Verbindungen, dadurch gekennzeichnet, daß sie etwa 8 bis 80 Gew.-% einer oder mehrerer Verbindungen aus Gruppe 1:

Gruppe 1: 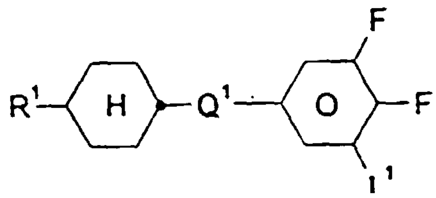

worin $R^1$ eine geradkettige Alkyl-, Alkenyl- oder Oxaalkylgruppe mit 2 bis 7 Kohlenstoffatomen, $Q^1$

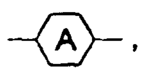

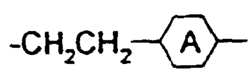

oder

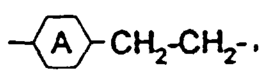

worin A trans-1,4-cyclohexylen oder 1,4-Phenylen, das durch ein oder zwei F-Atome substituiert sein kann, und $L^1$ H oder F bedeuten, und etwa 8 bis 80 Gew.-% einer oder mehrerer Verbindungen aus Gruppe 2:

Gruppe 2: 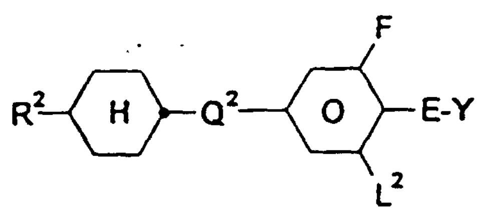

enthalten, worin $R^2$, $Q^2$ und $L^2$ jeweils die oben für $R^1$, $Q^1$ bzw. $L^1$ genannte Bedeutung besitzen, E $CF_2$ oder $OCF_2$ und Y H, F oder Cl bedeuten, wobei die Zusammensetzungen eine oder mehrere Verbindungen aus Gruppe 1 oder Gruppe 2 enthalten, worin A durch ein oder zwei F-Atome substituiertes 1,4-Phenylen bedeutet, mit der Maßgabe, daß Zusammensetzungen, die eine oder mehrere Verbindungen der Formel

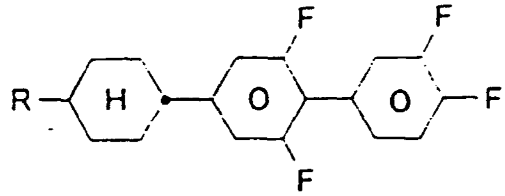

(R = Alkyl mit bis zu 7 Kohlenstoffatomen) enthalten, ausgeschlossen sind.

2. Nematische Flüssigkristallzusamwensetzungen nach Anspruch 1, dadurch gekennzeichnet, daß sie zwei, drei oder vier Verbindungen aus Gruppe 1 enthalten.

3. Nematische Flüssigkristallzusammensetzungen nach Anspruch 1 oder 2, dadurch gekennzeichnet, daß sie 8 bis 60 Gew.-% einer oder mehrerer Verbindungen aus Gruppe 1 und 8 bis 60 Gew.-% einer oder mehrerer Verbindungen aus Gruppe 2 enthalten.

4. Nematische Flüssigkristallzusammensetzungen nach Anspruch 3, dadurch gekennzeichnet, daß sie drei oder mehr Verbindungen aus beiden Gruppen 1 und 2 enthalten.

**Revendications**

1. Composition de cristaux liquides nématiques, se fondant sur des composés fluorés en position terminale et en position latérale, caractérisée en ce qu'elle comprend d'environ 8 à 80 % en poids d'un ou plusieurs composés choisis dans le groupe 1 :

groupe 1 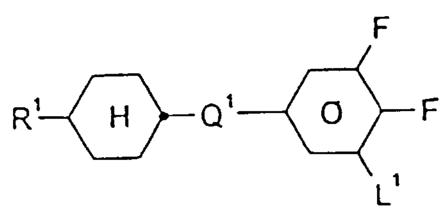

où $R^1$ désigne un groupe alkyle, alcényle ou oxaalkyle à chaîne droite ayant de 2 à 7 atomes de carbone,
$Q^1$ est

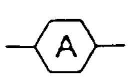 , 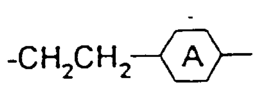 ou 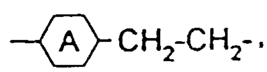

où A est un radical trans-1,4-cyclohexylène ou 1,4-phénylène pouvant être substitué par un ou deux atomes de F,
et $L^1$ est H ou F,
et environ 8 à 80 % en poids d'un ou plusieurs composés choisis dans le groupe 2 :

groupe 2 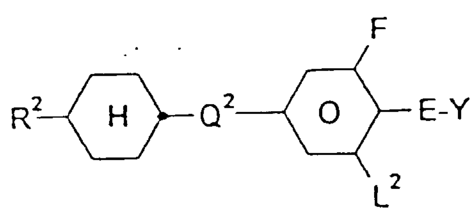

où $R^2$, $Q^2$ et $L^2$ ont les significations données ci-dessus respectivement pour $R^1$, $Q^1$ et $L^1$, E est $CF_2$ ou $OCF_2$ et Y est H, F ou Cl, où la composition comprend un ou plusieurs composés du groupe 1 ou du groupe 2 où A est le radical 1,4-phénylène, qui est substitué par un ou deux atomes de F, du moment que sont exclues les compositions comprenant un ou plusieurs composés de formule

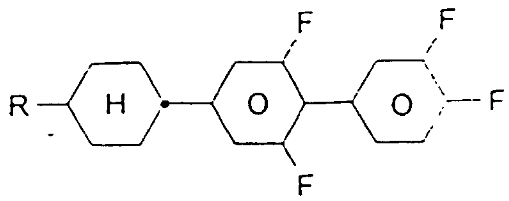

(R est un radical alkyle ayant jusqu'à 7 atomes de carbone).

**2.** Composition de cristaux liquides nématiques selon la revendication 1 , caractérisée en ce qu'elle comprend deux, trois ou quatre composés du groupe 1.

**3.** Composition de cristaux liquides nématiques selon la revendication 1 ou 2, caractérisée en ce qu'elle comprend de 8 à 60 % en poids d'un ou plusieurs composés du groupe 1 et de 8 à 60 % en poids d'un ou plusieurs composés du groupe 2.

**4.** Composition de cristaux liquides nématiques selon la revendication , caractérisée en ce qu'elle comprend trois composés ou plus de chacun des groupes 1 et 2.